# EUROPÄISCHE PATENTSCHRIFT

(11) **EP 1 815 269 B1**
(45) Veröffentlichungstag und Bekanntmachung des Hinweises auf die Patenterteilung: **11.01.2012**
(21) Anmeldenummer: 04822351.5
(22) Anmeldetag: 08.11.2004
(51) Int. Cl.: G01T 1/208

(54) **VERFAHREN ZUR SIGNALTRENNUNG IN SZINTILLATIONSDETEKTOREN**
METHOD FOR SIGNAL SEPARATION IN SCINTILLATION DETECTORS
PROCEDE POUR LA SEPARATION DES SIGNAUX DANS DES DETECTEURS A SCINTILLATION

(43) Veröffentlichungstag der Anmeldung: 08.08.2007
(73) Patentinhaber: ICX Radiation GmbH, 42651 Solingen (DE)
(72) Erfinder: STEIN, Jürgen, 42349 Wuppertal (DE); PAUSCH, Guntram, 01099 Dresden (DE)
(74) Vertreter: Schramm, Michael
(86) Internationale Anmeldenummer: PCT/EP2004/052874
(87) Internationale Veröffentlichungsnummer: WO 2006/048048

(56) Entgegenhaltungen:
- EP-A- 0 642 037
- GB-A- 2 332 512
- US-A- 5 367 168
- US-A- 5 410 153
- PATENT ABSTRACTS OF JAPAN Bd. 018, Nr. 436 (P-1786), 15. August 1994 (1994-08-15) & JP 06 138240 A (HITACHI LTD), 20. Mai 1994 (1994-05-20)
- HINRICHSEN P F: "A STABILIZED SCINTILLATION COUNTER" IEEE TRANSACTIONS ON NUCLEAR SCIENCE, IEEE INC. NEW YORK, US, Bd. NS-11, Nr. 3, Juni 1964 (1964-06), Seiten 420-425, XP009048323 ISSN: 0018-9499
- ADAMSON P ET AL: "The MINOS light-injection calibration system" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. 492, Nr. 3, 21. Oktober 2002 (2002-10-21), Seiten 325-343, XP004387891 ISSN: 0168-9002

## Beschreibung

Die Erfindung betrifft ein Verfahren zur Trennung von Nutzimpulsen und Testlichtimpulsen in Szintillationsdetektoren, vorzugsweise zum Nachweis ionisierender Strahlung, sowie einen Szintillationsdetektor mit Stabilisierung.

Szintillationsdetektoren sind aus dem Stand der Technik bekannt. Sie weisen einen Szintillator auf, der fest oder flüssig sein kann, in dem die nachzuweisende Strahlung, insbesondere ionisierende Strahlung, zumindest teilweise absorbiert wird. Die absorbierte Strahlung erzeugt angeregte Zustände im Szintillator, die unter Emission von Licht zerfallen.

Der Szintillationsdetektor weist darüber hinaus einen Lichtdetektor auf, mit dem das vom Szintillator emittierte Licht gemessen wird. Ein in der Praxis gängiger Lichtdetektor ist eine Fotokathode in Verbindung mit einem Fotomultiplier, wobei das Licht zunächst auf die Fotokathode trifft, aus der es Elektronen auslöst, die dann im Fotomultiplier vervielfacht und verstärkt werden, so dass ein messbarer elektrischer Impuls erzeugt wird. Die vorliegende Erfindung ist jedoch auch für andere Lichtdetektoren zu verwenden.

Insbesondere bei der Verwendung von Szintillationsdetektoren außerhalb klimatisierter Räume, wie etwa von Labors, macht sich die Temperaturabhängigkeit der Verstärkung insbesondere des Lichtdetektors negativ bemerkbar. Die umweltbedingten Schwankungen in der Verstärkung insbesondere des Lichtdetektors, die im Wesentlichen - aber nicht nur - durch verschiedene Temperaturen ausgelöst werden, müssen daher bei der Messung berücksichtigt werden.

Es ist bekannt, den Szintillationsdetektor als Ganzes unter Verwendung einer Kalibrierquelle zu kalibrieren, indem man dem Detektor der Strahlung der Kalibrierquelle aussetzt, deren Eigenschaften, also insbesondere deren Energie, genau bekannt sind, und die Messergebnisse auf einen Referenzwert abgleicht, so dass der Detektor als Ganzes kalibriert wird.

Dieses Kalibrierverfahren hat den Nachteil, dass zur Kalibrierung echte Ereignisse erzeugt werden müssen, die die tatsächlich zu messenden Werte überlagern. Dies führt dazu, dass Strahlung geringer Intensität, die im Energiebereich der Kalibrierquelle liegt, nicht oder nur sehr schlecht nachgewiesen werden kann, da sie von den Kalibriersignalen überlagert oder gar vollständig überdeckt wird. Kalibriert man den Szintillationsdetektor dagegen nur vor und/oder nach der eigentlichen Messung, kann der durch Umwelteinflüsse hervorgerufene Gang der Verstärkung während der laufenden Messung nicht berücksichtigt werden.

Es ist bekannt, dass ein Lichtdetektor, insbesondere die Kombination von Fotomultiplier mit Fotokathode, sehr viel schneller und deutlicher auf Umwelteinflüsse reagieren kann als der Szintillator selbst, so dass eine Stabilisierung zumindest des Lichtdetektors im laufenden Betrieb wünschenswert ist. Im Stand der Technik wird daher der Lichtdetektor separat stabilisiert, indem man Testlichtsignale, die von einer Testlichtquelle, etwa einer LED, erzeugt werden, zum Lichtdetektor führt. Dies erfolgt regelmäßig so, dass das Licht der LED in den Szintillator eingekoppelt wird und über den Szintillator auf die Fotokathode des Fotomultipliers trifft.

Die Verwendung derartiger Testlichtquellen ermöglicht die Stabilisierung des Lichtdetektors auch während der laufenden Messung der nachzuweisenden Signale, der so genannten Nutzsignale. Um das Ergebnis nicht zu verfälschen, ist es jedoch notwendig, die Testlichtsignale von den Nutzsignalen zu trennen. Hierfür sind zwei Verfahren bekannt.

Um die Testlichtsignale von den Nutzsignalen trennen zu können, wird im Stand der Technik vorgeschlagen, Testlichtsignale zu verwenden, die größer als die größten und/oder kleiner als die kleinsten Nutzsignale sind. Damit liegen die vom Lichtdetektor gemessenen Testlichtsignale außerhalb des Spektrums der Nutzsignale und damit des Nutzspektrums, so dass diese sehr einfach von den Nutzsignalen unterschieden werden können.

Nachteilig an diesem Verfahren ist, dass der dynamische Bereich des Detektors größer sein muss als es die Nutzsignale erfordern würden. Dies führt dazu, dass entweder die mögliche Detektorauflösung nicht zur Verfügung steht, oder der elektronische Aufwand für den Detektor steigt, um den dynamischen Bereich für Kalibrierzwecke zu vergrößern. Da das Testlichtsignal außerhalb des Bereichs der Nutzsignale liegt, ist es auch prinzipiell nicht möglich, die Linearität der Detektorkennlinie im Nutzbereich zu überprüfen. Insbesondere bei der Verwendung von Fotomultipliern mit Fotokathoden als Lichtdetektoren ist dies nachteilig, da diese Lichtdetektoren nicht sehr linear sind und sich die Kennlinie darüber hinaus mit der Betriebsspannung ändert. Schließlich ist es ebenso prinzipiell nicht möglich, bewusst einen besonders interessanten Bereich der Amplitude bzw. des Impulshöhenspektrums zu überwachen, da dieser Bereich zwingend im Nutzspektrum und sogar mitten in dessen besonders interessierenden Bereich liegt.

Zur Vermeidung dieser Nachteile ist es bekannt, von einer LED erzeugte Testlichtimpulse zu verwenden, deren Amplitude so gewählt ist, dass die Impulse im Nutzspektrum auftreten. Die Testlichtimpulse sind dabei in geeigneter Art und Weise gepulst, wobei der Testlicht-Generator zusätzlich eine elektronische Markierung erzeugt, ein so genanntes Triggersignal, die von der Messschaltung bzw. der spektroskopischen Elektronik des Detektors erkannt und ausgewertet wird, etwa indem ein zusätzliches Bit im Analog-zu-Digital-Konverter (ADC) gesetzt und gelesen wird. Diese Markierung erlaubt dann die elektronische Trennung zwischen Nutz- und Testlichtsignal.

Nachteilig an diesem Verfahren ist, dass der Testlicht-Generator und die Messschaltung des Detektors außerordentlich genau aufeinander abgestimmt und darüber hinaus elektronisch gekoppelt sein müssen. Dies führt zu einer wesentlich komplexeren elektronischen Schaltung als zum Betrieb des Detektors eigentlich notwendig, verbunden mit dem Erfordernis, aufwändigere elektronische Bauteile zu verwenden. Durch die Verwendung zusätzlicher Schaltkreise entsteht auch ein zusätzlicher Strom- und Energiebedarf, was insbesondere bei mobilen Szintillationsdetektoren, die mit Batterien oder Akkumulatoren betrieben werden, von großem Nachteil ist.

Aus der JP 06-138240 A ist ein Szintillationsdetektor bekannt, welcher mit Hilfe einer gepulsten Testlichtquelle stabilisiert wird. Testlichtsignale mit einer bestimmten Impulsbreite und Impulshöhe werden in den Szintillationsdetektor eingekoppelt. Die Impulsbreite und die Impulshöhe des Testlichtsignals wird so gewählt, dass die vom Szintillationsdetektor gemessenen Testlichtimpulse und Messlichtimpulse aufgrund der Pulshöhen-Verteilung voneinander getrennt werde können. Die Testlichtsignale werden dabei so gewählt, dass die Testlichtimpulse außerhalb des Nutzspektrums liegen.

Aus Hinrichsen: "A Stabilized Scintillation Counter" IEEE Transactions on Nuclear Science, IEEE Incorporation New York, US, Band NS-11, Nr. 3, Juni 1964, Seiten 420 bis 425 ist ein stabilisierter Szintillationsdetektor bekannt, welcher zum Stabilisieren eines Szintillationsdetektors als Referenzlichtquelle eine Po²¹⁰ α-Quelle verwendet.

Aufgabe der Erfindung ist es, die oben beschriebenen Nachteile zu vermeiden.

Diese Aufgabe wird erfindungsgemäß durch ein Verfahren zur Trennung von Nutzimpulsen und Testlichtimpulsen in Szintillationsdetektoren gelöst, bei dem zunächst eine regelmäßig gepulste Testlichtquelle, bevorzugt eine gepulste LED, ausgewählt wird, deren einzelne Testlichtimpulse einen zeitlichen Verlauf der relativen Lichtintensität aufweisen, der sich vom zeitlichen Verlauf der relativen Lichtintensität der Nutzimpulse unterscheidet. Die von der Testlichtquelle erzeugten Testlichtimpulse werden erfindungsgemäß in den Lichtdetektor des Szintillationsdetektors zur Messung der Testlichtimpulse durch den Lichtdetektor eingeleitet. Anschließend wird der zeitliche Verlauf der relativen Lichtintensitäten der gemessenen Impulse ausgewertet und die gemessenen Impulse werden durch Ausnutzung der unterschiedlichen zeitlichen Verläufe der relativen Lichtintensitäten in Testlichtimpulse und Nutzimpulse getrennt.

Erfindungsgemäß erfolgt die Auswertung des zeitlichen Verlaufs der relativen Lichtintensitäten der Impulse unter Verwendung einer geeigneten elektrischen Schaltung. Die Erfindung umfasst aber ebenso ein Verfahren, bei dem die Impulse digital abgetastet, d.h. digitalisiert werden, wobei die Abtastung bevorzugt mit einer Abtastrate zwischen 1 und 1000 Mega-Samples pro Sekunde (MS/s), besonders bevorzugt mit einer Abtastrate zwischen 5 und 100 MS/s und ganz besonders bevorzugt mit einer Abtastrate zwischen 10 und 25 MS/s erfolgt, und wobei die Auswertung des zeitlichen Verlaufs der relativen Lichtintensitäten der Impulse mit Hilfe eines vorbestimmten Algorithmus erfolgt.

Es hat sich als günstig erwiesen, wenn für das erfindungsgemäße Verfahren regelmäßig gepulste Testlichtsignale verwendet werden. Besonders bevorzugt ist es dabei, wenn die Testlichtsignale so ausgewählt werden, dass sie zumindest teilweise im Nutzbereich, bevorzugt im besonders empfindlichen Nutzbereich, der Nutzsignale liegen. Es ist darüber hinaus günstig, wenn die Testlichtsignale so moduliert werden, dass Impulsfolgen mit unterschiedlich großen, bestimmbaren Amplituden entstehen, die vorzugsweise im Wesentlichen im Nutzbereich der Nutzsignale liegen.

Die Testlichtquelle kann erfindungsgemäß auch so betrieben werden, dass mindestens eine Impulsfolge, aufweisend mindestens einen wiederkehrenden Testlichtimpuls, erzeugt wird, wobei die Impulsfolge im Detektor ausgewertet und dazu verwendet wird, den Verstärkungsfaktor des Lichtdetektors zu bestimmen und/oder die Auflösung des Lichtdetektors, vorzugsweise in Abhängigkeit von der detektierten Lichtmenge zu messen. Dieses Verfahren kann auch dazu verwendet werden, den Lichtdetektor zu stabilisieren oder die Totzeit des Szintillationsdetektors zu bestimmen. Totzeit bezeichnet dabei die Zeit, in der der Szintillationsdetektor nach dem Nachweis eines Signals keine weiteren Signale erkennen kann.

Die Testlichtquelle kann erfindungsgemäß weiterhin auch so betrieben werden, dass mindestens eine Impulsfolge, aufweisend mindestens zwei Testlichtimpulse unterschiedlicher Amplituden, erzeugt wird, wobei die Impulsfolge im Detektor ausgewertet und dazu verwendet wird, den Verstärkungsfaktor des Lichtdetektors zu bestimmen, und/oder die Kennlinie des Lichtdetektors und/oder die Auflösung des Lichtdetektors, vorzugsweise in Abhängigkeit von der detektierten Lichtmenge zu messen. Dieses Verfahren kann auch dazu verwendet werden, den Lichtdetektor zu stabilisieren oder die Kennlinie des Lichtdetektors zu linearisieren oder die Totzeit des Szintillationsdetektors zu bestimmen.

Ebenfalls offenbart ist ein Verfahren zur Stabilisierung eines Lichtdetektors, nachdem zunächst Testlichtimpulse wie oben beschrieben erzeugt und abgetrennt werden. Die Impulshöhen der Testlichtimpulse werden zu verschiedenen Zeiten analysiert, wobei die Differenz der Impulshöhe der Testlichtimpulse, bevorzugt der mittleren Impulshöhe mehrerer Testlichtimpulse, zu einem Referenzwert bestimmt wird und die Verstärkung des Lichtdetektors gerührt und stabilisiert wird, indem die Differenz der Impulshöhen der Testlichtimpulse als Führungsgröße verwendet wird.

Von der Erfindung umfasst ist auch ein Verfahren zur Bestimmung der Auflösung eines Lichtdetektors, bei dem Testlichtimpulse wie oben beschrieben erzeugt und abgetrennt werden. Die Impulshöhen der Testlichtimpulse zu verschiedenen Zeiten werden analysiert und die Auflösung des Lichtdetektors wird dann aus der Streuung der Impulshöhen der Testlichtimpulse bestimmt.

Weiterhin ist ein Verfahren zur Bestimmung der Totzeit eines Szintillationsdetektors umfasst, nach dem zunächst Testlichtimpulse nach einem oben beschriebenen Verfahren erzeugt und abgetrennt werden, wobei eine vorbestimmte Zahl von Testlichtimpulsen in einer vorgegebenen Zeiteinheit erzeugt wird. Die als Testlichtimpulse identifizierten Signale in der vorgegebenen Zeiteinheit werden gezählt, wobei die Totzeit des Szintillationsdetektors durch Vergleich der Zahl der erzeugten Testlichtimpulse mit der Zahl der als Testlichtimpulse identifizierten Signale bestimmt wird

Besonders vorteilhaft ist es für alle vorgenannten verschiedenen Ausgestaltungen des erfindungsgemäßen Verfahrens, wenn die Testlichtsignale parallel zu den Nutzsignalen während der eigentlichen Messung aufgenommen werden.

Beansprucht ist darüber hinaus ein Szintillationsdetektor, bevorzugt ein Szintillationsdetektor mit nicht stationärer Energieversorgung, besonders bevorzugt ein batteriebetriebener Szintillationsdetektor, der einen Szintillator und einen Lichtdetektor aufweist, wobei der Lichtdetektor vorzugsweise Fotokathode und Fotomultiplier aufweist. Dieser erfindungsgemäße Szintillationsdetektor weist darüber hinaus eine Testlichtquelle auf, bevorzugt eine LED, wobei die Stabilisierung dieses Szintillationsdetektors mit dem oben beschriebenen Verfahren erfolgt.

In einer vorteilhaften Ausgestaltung sind der Generator zur Erzeugung der Testlichtsignale und die elektronische Messschaltung elektrisch voneinander getrennt, besonders bevorzugt sind der Generator zur Erzeugung der Testlichtsignale und die elektronische Messschaltung mechanisch voneinander getrennt.

Das erfindungsgemäße Verfahren sowie die erfindungsgemäße Vorrichtung vermeiden die Nachteile des Standes der Technik. Mit dem Verfahren ist es insbesondere möglich, Testlichtimpulse im Nutzbereich des gemessenen Nutzspektrums zu verwenden und diese absolut parallel zur laufenden Messung der Nutzsignale einzuspeisen und abzutrennen, ohne dabei das gemessene Spektrum zu beeinflussen, da die Testlichtsignale aufgrund ihres von den Nutzsignalen verschiedenen zeitlichen Verlaufs vollständig elektronisch oder im Rahmen eines vorbestimmten Algorithmus von den Nutzsignalen abgetrennt werden können. Aufgrund dieser parallelen Verwendung von Testlichtimpulsen im Bereich des Nutzspektrums kann die Linearität des Detektors, ebenso wie dessen Auflösung, Totzeit, die Verschiebung der Verstärkung und dessen Stabilisierung sehr genau bestimmt und geregelt werden, was nach den herkömmlichen Verfahren nicht möglich ist. Damit ist es darüber hinaus möglich, einen Szintillationsdetektor zur Verfügung zu stellen, der in überlegener Art und Weise stabilisiert werden kann und der elektrisch und mechanisch erheblich einfacher aufgebaut werden kann, da es möglich ist, Testlichtsignal-Generator und Auswerte-Elektronik vollständig elektrisch und mechanisch voneinander zu trennen.

Einige spezielle Ausführungsbeispiele der Erfindung werden im Folgenden an Hand der Figuren 1 bis 5 näher erläutert.

Es zeigen
- Figur 1a:: Ausgangssignal am Vorverstärker (Testlichtimpuls);
- Figur 1b:: Testlichtimpuls nach Filterung;
- Figur 2a:: Ausgangssignal vom Vorverstärker (Nutzimpuls);
- Figur 2b:: Nutzimpuls nach Filterung;
- Figur 3a:: Signalschwerpunkte als Funktion der Energie (zweidimensionale Darstellung);
- Figur 3b:: Signalbreite als Funktion der Energie (zweidimensionale Darstellung);
- Figur 4:: Spektrum einer gepulsten LED nach Abtrennung nach Abtrennung der Nutzsignale;
- Figur 5:: Spektrum einer ¹⁵²Eu γ-Strahlungsquelle nach Abtrennung der Testlichtsignale der LED.

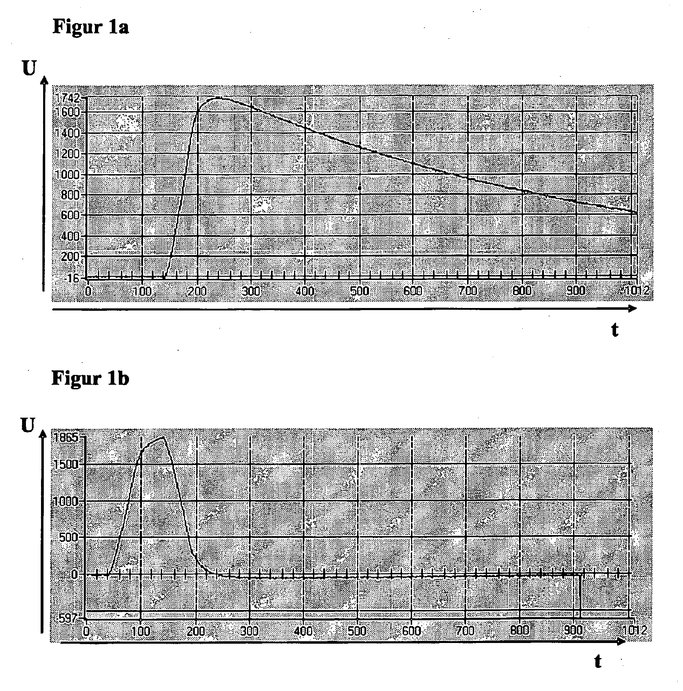

Figur 1a zeigt das Ausgangssignal, welches von einem in den Lichtdetektor eines Szintillationsdetektors geleiteten Testlichtimpuls, erzeugt mit einer LED, aus dem Vorverstärker heraustritt, als Funktion der gemessenen Spannung U von der Zeit t. Figur 1b zeigt dasselbe Signal, allerdings nach einer Filterung, wobei hier die gleitende Entfaltung oder Moving Window Deconvolution (MWD) zur Filterung verwendet wurde. Das Filterverfahren der MWD ist bekannt und im Detail in der EP 550 830 beschrieben. Auch hier ist die Spannung U über der Zeit t aufgetragen.

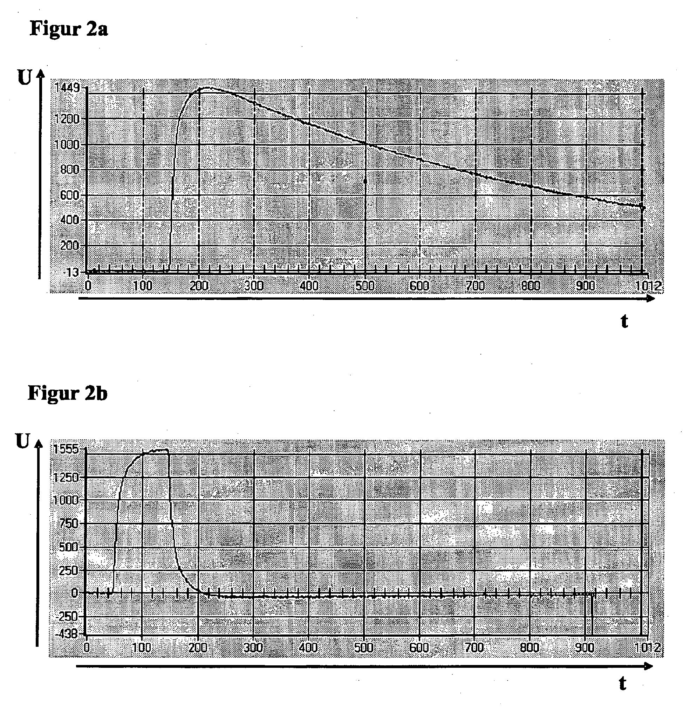

Figur 2a zeigt den Signalausgang am Vorverstärker für im Szintillator durch die Strahlung einer γ-Kalibrierquelle erzeugtes Licht im Szintillator, während Figur 2b das gleiche Signal nach Filterung mit der MWD zeigt. In beiden Figuren ist die gemessene Spannung U als Funktion der Zeit t dargestellt.

Die in Figur 1 und Figur 2 gezeigten Darstellungen sind Ergebnisse realer Messungen, wobei ein Szintillationsdetektor verwendet wird, der einen NaI(T1)-Kristall, sowie einen Fotomultiplier mit Fotokathode als Lichtdetektor aufweist. Eine LED als Testlichtquelle ist im Szintillationsdetektor fest eingebaut.

Der für das Experiment verwendete LED-Treiber, der die LED-Impulslänge programmgesteuert in einer vorbestimmten Weise variiert, ist von der Detektorelektronik vollständig elektrisch und mechanisch getrennt und als externer LED-Treiber ausgeführt. Zur Signalverarbeitung kommt ein bekannter Vorverstärker, sowie ein Timing-Filterverstärker (TFA) zum Einsatz. Die Signale werden im gezeigten Beispiel mit einem CompuScope Waveform Digitizer digitalisiert. Die Detektorsignale werden dabei nach dem Vorverstärker mit 25 MS/s abgetastet, wobei die Abtastung selbst hier durch ein externes Triggersignal, erzeugt durch Differenzierung und Verstärkung des Detektorsignals im TFA, gestartet wird. Das so abgetastete Signal wird anschließend digital gefiltert, wobei im Ausführungsbeispiel die gleitende Entfaltung als Filterverfahren zum Einsatz kommt. Auch die Verwendung anderer geeigneter und dem Fachmann geläufiger Filterverfahren ist ohne weiteres möglich.

Das gefilterte Signal wird dann integriert, um so ein Signal E zu erhalten, welches ein Maß für die Energie der im Szintillator absorbierten γ-Strahlung darstellt.

Für die hier beschriebenen Ausführungsbeispiele werden zwei verschiedene, alternativ eingesetzte Impulsformparameter bestimmt, nämlich einmal der Parameter S, der dem Schwerpunkt des gefilterten Signals, bezogen auf den Triggerzeitpunkt entspricht, und zum anderen der Parameter B, der der Breite des gefilterten Signals entspricht. Die Verwendung von B als Impulsformparameter hat den Vorteil, dass kein Referenzzeitpunkt bestimmt werden muss. Dieses Verfahren hat daher den weiteren Vorteil, dass es auch in Verbindung mit frei laufenden ADC's verwendet werden kann, wobei die digitale Abtastung nicht durch ein Triggersignal ausgelöst wird, so dass auf einen externen Trigger ganz verzichtet werden kann.

Da das erfindungsgemäße Verfahren den unterschiedlichen zeitlichen Verlauf von Testlichtsignalen und Nutzsignalen und damit die unterschiedliche Impulsform der gemessenen Signale nutzt, die sich sowohl in dem Ausgangssignal des Vorverstärkers als auch in dem anschließend gefilterten Signal widerspiegelt, wie den Figuren 1a und 1b sowie 2a und 2b klar entnommen werden kann, ist auch die Verwendung anderer Impulsformparameter, beispielsweise der Signalanstiegszeit, erfindungsgemäß möglich, solange dieser geeignet ist, in irgendeiner Form den zeitlichen Verlauf zu parametrisieren.

Als Testlichtquelle wurde eine bereits erwähnte blaue LED verwendet, die mit Rechtecksignalen mit einer Spannung von 3,7 V betrieben wurde. Um ein definiertes Nutzspektrum zur Verfügung zu haben, wurde als γ-Strahlungsquelle eine ¹⁵²Eu Quelle von 1 Mikrocurie Aktivität in 5 cm Abstand vom Detektor eingesetzt. Der Zeitverlauf der Nutzsignale ist durch die Zerfallszeitkonstante des eingesetzten Szintillators bestimmt, die bei dem im beschriebenen Experiment verwendeten NaI(T1) Szintillator etwa 250 ns beträgt.

Während der eigentlichen Messung werden die Impulslängen der Lichtimpulse durch den LED-Treiber zyklisch variiert, und zwar konkret im Bereich t_{LED} = i * 270 ns mit i = 2, 3, ... 8. Dadurch entstehen mehrere LED-Linien im Energiespektrum mit weitgehend gleichem Abstand zueinander, so dass damit nicht nur eine kontinuierliche Stabilisierung, sondern auch eine kontinuierliche Überprüfung der Linearität der Detektorkennlinie während der eigentlichen Messung möglich ist. Die schon bei Betrachtung mit bloßem Auge beim Vergleich der Spektren 1a und 2a bzw. 1b und 2b erkennbaren Unterschiede in der Signalform genügen dabei, um die Testlichtimpulse von den Nutzimpulsen vollständig zu trennen.

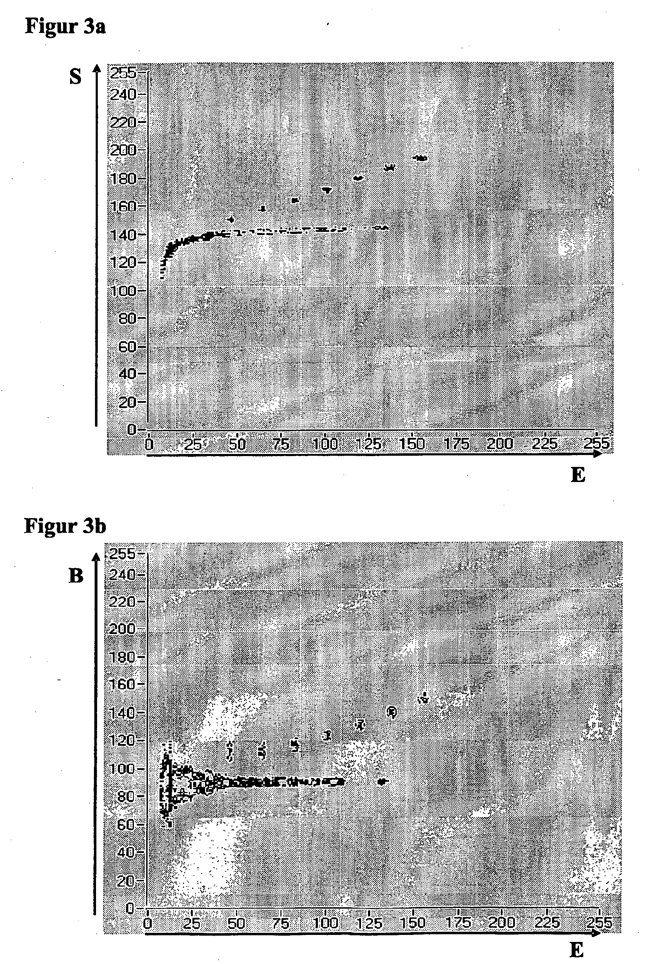

Figur 3a und Figur 3b zeigen in einer anderen Darstellungsweise anschaulich, wie gut die erfindungsgemäße Signaltrennung tatsächlich arbeitet. Figur 3a zeigt in einer zweidimensionalen Darstellung der gemessenen Signale, d.h. der Testlichtsignale und der Nutzsignale, den Impulsformparameter S als Funktion der Energie E. Der weitgehend kontinuierliche, zunächst mit der Energie ansteigende und dann einen vergleichsweise konstanten Wert S aufweisenden Bereich zeigt die gemessenen γ-Signale, d.h. die Nutzsignale. Die sieben nahezu diskreten Punkte oberhalb des γ-Spektrums zeigen die LED-Impulse mit t_{LED} = 540 ns, 810 ns, 1.080 ns, 1.350 ns, 1.620 ns, 1.890 ns und 2.160 ns Impulslänge.

Es ist deutlich zu erkennen, dass die verschiedenen Signaltypen vollständig und eindeutig voneinander getrennt sind, obwohl die Testlichtimpulse und die Nutzimpulse im gleichen Energiebereich, d.h. im Nutzbereich des Detektors, auftreten.

Ein zweites Beispiel, bei dem die Impulsbreite B als Impulsformparameter verwendet und gegen die gemessene Energie E aufgetragen wird, zeigt Figur 3b. Auch hier sind der kontinuierliche Bereich des Nutzspektrums und die diskreten Punkte der sieben LED-Impulse klar voneinander getrennt. Aus Figur 3b ist deutlich ersichtlich, dass es genügt, alle Impulse, für die gilt, E > E₀ und B > Bo als LED-Impulse zu qualifizieren, während alle anderen Impulse dem Nutzspektrum zugeordnet werden, wobei E₀ die Energie ist, unterhalb derer keine Testlichtimpulse ins Spektrum eingespeist werden und B₀ den Wert repräsentiert, unterhalb dessen keine LED-Impulse mehr auftreten.

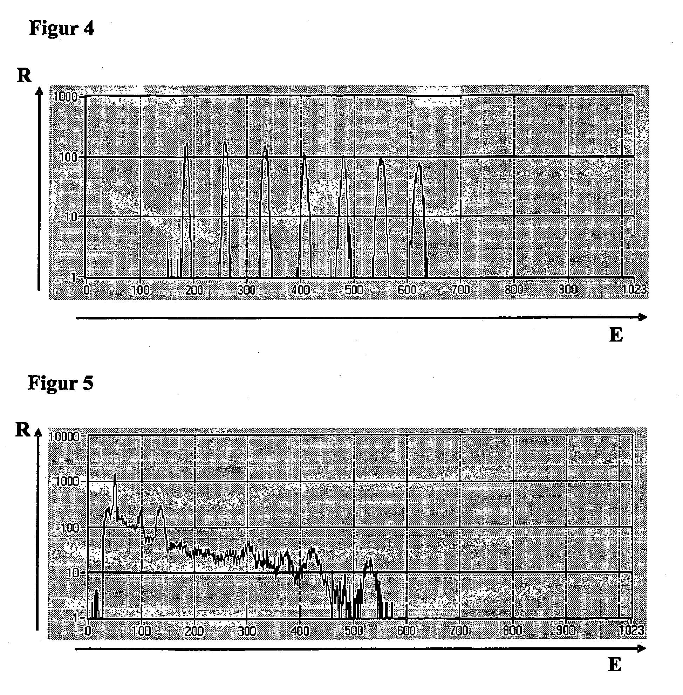

Die Ergebnisse der Signaltrennung für das zweite Beispiel, also unter Verwendung der Impulsbreite B als Impulsformparameter, zeigen Figur 4 und Figur 5. Bei beiden dort gezeigten Spektren ist die Anzahl der gemessenen Ereignisse R über der Energie E aufgetragen, wobei zur Verdeutlichung eine logarithmische Skala verwendet wurde.

In Figur 4 ist das über die Impulsform in der beschriebenen Weise abgetrennte Spektrum der Testlichtimpulse zu erkennen. Deutlich zu sehen sind sieben Peaks, d.h. Häufungen von Impulsen, mit gleichem Abstand, die den sieben verschiedenen Testlichtimpulsen entsprechen. Es ist sehr gut zu erkennen, dass das Spektrum praktisch völlig frei von Ereignissen ist, die durch γ-Strahlung hervorgerufen wurden, d.h. dass praktisch keinerlei Nutzimpulse für das Nutzspektrum verloren gehen, indem sie fälschlicherweise dem LED-Spektrum zugeordnet werden. Gleichzeitig ist das sehr gut separierte Testlichtspektrum bestens geeignet, auch nur kleine Verschiebungen der Verstärkung oder der Veränderung der Linearität des Detektors während der laufenden Messung zu erkennen. Die gemessenen Veränderungen in der Linearität und/oder der Verstärkung des Detektors während der laufenden Messung können darüber hinaus dazu verwendet werden, die Ausgangssignale des Detektors im Wege der Rückkopplung zu stabilisieren. Aus der Breite der Peaks kann die Auflösung des Detektors als Funktion der Lichtmenge (Peaklage) bestimmt werden. Außerdem können die Impulse im LED Spektrum gezählt und daraus bei bekannter Messdauer und bekannter Impulsfolgefrequenz der Testlichtimpulse die Totzeit des Detektors einschließlich der nachgeschalteten Elektronik bestimmt werden.

Figur 5 zeigt das zugehörige γ-Spektrum der ¹⁵²Eu-Quelle, also das Nutzspektrum, welches umgekehrt keinerlei Testlichtimpulse aufweist, was erneut zeigt, dass die erfindungsgemäße Trennung der Testlichtimpulse von den Nutzimpulsen unter Zuhilfenahme eines Impulsformparameters sehr exakt arbeitet.

Bei dem im Ausführungsbeispiel verwendeten Szintillationsdetektor, erfolgte die Abtrennung der Testlichtimpulse von den Nutzimpulsen nach einer Abtastung und damit Digitalisierung des zu verarbeitenden Signals, so dass die eigentliche Abtrennung wie oben beschrieben digital, d.h. durch Anwendung vorbestimmter Regeln und Algorithmen, erfolgt ist. Da die verschiedenen Signaltypen gut trennbar sind, wie in Figuren 3a und 3b zu erkennen ist, ist es aber ebenso möglich, die Abtrennung der Impulse elektronisch, d.h. weitgehend analog, zu realisieren. Entsprechende Elektronikelemente wie Pulsform-Diskriminatoren etc. sind bekannt.

Die Digitalisierung der Signale und die digitale Weiterverarbeitung hat dabei den zusätzlichen Vorteil, dass die Signalverarbeitung sehr flexibel ausgeführt werden kann und etwa ein Wechsel des zu verwendenden Impulsformparameters durch Aufspielen einer anderen Auswertelogik technisch sehr leicht zu realisieren ist. Gleichzeitig ist es möglich, das Verfahren noch weiter dahingehend zu verfeinern, dass verschiedene Impulsformparameter parallel ausgewertet werden. Dies ist zwar analog ebenfalls möglich, erfordert allerdings regelmäßig einen erhöhten Einsatz von Elektronik. Die dargestellte Messung mit einer Abtastrate von 25 MS/s zeigt, dass mit dieser Abtastrate nach dem erfindungsgemäßen Verfahren eine sehr gute und exakte Trennung von Nutz- und Testlichtimpulsen erfolgen kann, da diese Abtastrate eine genaue Impulsformanalyse zulässt. Weitere Messungen haben zu dem überraschenden Ergebnis geführt, dass bei dem eingesetzten NaI(T1) Szintillator eine ebenso gute Trennung bereits bei 10 MS/s erreicht wurde, obwohl auf den ersten Blick eine signifikante Verschlechterung der Ergebnisse bei dieser Verringerung der Abtastrate um den Faktor 2,5 zu erwarten gewesen wäre. Die Möglichkeit, mit vergleichsweise geringen Abtastraten zu arbeiten ist ein weiterer Vorteil der Erfindung, da eine geringere Abtastrate technisch leichter zu realisieren ist und weniger Energie benötigt, was insbesondere bei nicht stationären Handgeräten ein ganz wesentlicher Vorteil ist. Je nach verwendetem Szintillator können hierbei, abhängig von dessen Zeitkonstante, andere Abtastraten optimal sein.

## Patentansprüche

1. Verfahren zur Trennung von Nutzimpulsen und Testimpulsen in Szintillationsdetektoren, vorzugsweise zum Nachweis ionisierender Strahlung, aufweisend mindestens die Verfahrensschritte:
• Auswählen einer regelmäßig gepulsten Testlichtquelle, bevorzugt einer gepulsten LED, deren einzelne Testlichtimpulse einen zeitlichen Verlauf der relativen Lichtintensität aufweisen, der sich vom zeitlichen Verlauf der relativen Lichtintensität der Messlichtimpulse unterscheidet,
• Einleiten der von der Testlichtquelle erzeugten Testlichtimpulse in den Lichtdetektor des Szintillationsdetektors zur Messung der Testlichtimpulse durch den Lichtdetektor,
• Auswerten des zeitlichen Verlaufs der relativen Lichtintensitäten der vom Szintillationsdetektor gemessenen Impulse,
• Trennen der gemessenen Impulse durch Nutzung des verschiedenen zeitlichen Verlaufs der relativen Lichtintensitäten in Testlichtimpulse und Messlichtimpulse.

2. Verfahren nach Anspruch 1, wobei die Auswertung des zeitlichen Verlaufs der relativen Lichtintensitäten der Impulse unter Verwendung einer geeigneten elektrischen Schaltung erfolgt.

3. Verfahren nach Anspruch 1, wobei die Impulse digital abgetastet (digitalisiert) werden, wobei die Abtastung bevorzugt mit einer Abtastrate zwischen 1 und 1000 Mega-Samples pro Sekunde (MS/s), besonders bevorzugt mit einer Abtastrate zwischen 5 und 100 MS/s und ganz besonders bevorzugt mit einer Abtastrate zwischen 10 und 25 MS/s erfolgt, und wobei die Auswertung des zeitlichen Verlaufs der relativen Lichtintensitäten der Impulse mit Hilfe eines vorbestimmten Algorithmus erfolgt.

4. Verfahren nach einem der vorhergehenden Ansprüche, wobei die Testlichtsignale so ausgewählt werden, dass sie zumindest teilweise im Nutzbereich, bevorzugt im besonders empfindlichen Nutzbereich, der Messlichtsignale liegen.

5. Verfahren nach einem der vorhergehenden Ansprüche, wobei die Testlichtsignale so moduliert werden, dass Impulsfolgen mit unterschiedlich großen, bestimmbaren Amplituden entstehen, die vorzugsweise im wesentlichen im Nutzbereich der Messlichtsignale liegen.

6. Verfahren nach dem vorhergehenden Anspruch, wobei die Testlichtquelle so betrieben wird, dass mindestens eine Impulsfolge, aufweisend mindestens einen wiederkehrenden Testlichtimpuls erzeugt wird, wobei die Impulsfolge im Detektor ausgewertet und zu mindestens einem der folgenden Zwecke verwendet wird:
• Bestimmen des Verstärkungsfaktors des Lichtdetektors aus der ausgewerteten Impulsfolge;
• Bestimmen der Auflösung des Lichtdetektors, vorzugsweise in Abhängigkeit von der detektierten Lichtmenge;
• Stabilisierung des Lichtdetektors;
• Bestimmen der Totzeit des Szintillationsdetektors.

7. Verfahren nach Anspruch 6, wobei die Testlichtquelle so betrieben wird, dass mindestens eine Impulsfolge, aufweisend mindestens zwei Testlichtimpulse unterschiedlicher Amplituden, erzeugt wird, wobei die Impulsfolge im Detektor ausgewertet und zu mindestens einem der folgenden Zwecke verwendet wird:
• Bestimmen des Verstärkungsfaktors des Lichtdetektors aus der ausgewerteten Impulsfolge;
• Messen der Kennlinie des Lichtdetektors;
• Bestimmen der Auflösung des Lichtdetektors, vorzugsweise in Abhängigkeit von der detektierten Lichtmenge;
• Stabilisierung des Lichtdetektors;
• Linearisieren der Kennlinie des Lichtdetektors;
• Bestimmen der Totzeit des Szintillationsdetektors.

8. Verfahren zur Stabilisierung eines Lichtdetektors mit den folgenden Verfahrensschritten:
• Erzeugen und Abtrennen von Testlichtimpulsen nach einem der vorhergehenden Ansprüche;
• Analyse der Impulshöhen der Testlichtimpulse zu verschiedenen Zeiten;
• Bestimmung der Differenz der Impulshöhe der Testlichtimpulse, bevorzugt der mittleren Impulshöhe mehrerer Testlichtimpulse, zu einem Referenzwert;
• Führen und Stabilisieren der Verstärkung des Lichtdetektors unter Verwendung der Differenz der Impulshöhen der Testlichtimpulse als Führungsgröße.

9. Verfahren zur Bestimmung der Auflösung eines Lichtdetektors mit den folgenden Verfahrensschritten:
• Erzeugen und Abtrennen von Testlichtimpulsen nach einem der Ansprüche 1 bis 7;
• Analyse der Impulshöhen der Testlichtimpulse zu verschiedenen Zeiten;
• Bestimmung der Auflösung des Lichtdetektors aus der Streuung der Impulshöhen der Testlichtimpulse.

10. Verfahren zur Bestimmung der Totzeit eines Szintillationsdetektors mit den folgenden Verfahrensschritten:
• Erzeugen und Abtrennen von Testlichtimpulsen nach einem der Ansprüche 1 bis 7, wobei eine vorbestimmte Zahl von Testlichtimpulsen in einer vorgegebenen Zeiteinheit erzeugt wird;
• Zählen der als Testlichtimpulse identifizierten Signale in der vorgegebenen Zeiteinheit;
• Bestimmen der Totzeit des Szintillationsdetektors durch Vergleich der Zahl der erzeugten Testlichtimpulse mit der Zahl der als Testlichtimpulse identifizierten Signale.

11. Verfahren nach einem der vorherigen Ansprüche, wobei die Testlichtsignale parallel zu den Messlichtsignalen während der eigentlichen Messung aufgenommen werden.

12. Szintillationsdetektor, bevorzugt mit nicht stationärer Energieversorgung, besonders bevorzugt ein Batterie betriebener Szintillationsdetektor, aufweisend einen Szintillator und einen Lichtdetektor, vorzugsweise mit Fotokathode und Fotomultiplier, und eine regelmäßig gepulste Testlichtquelle, bevorzugt eine gepulste LED zum Erzeugen von Testlichtimpulsen, welche in den Lichtdetektor zur Messung der Testlichtimpulse einleitbar sind" und eine elektronische Messschaltung, **dadurch gekennzeichnet, dass** die elektronische Messschaltung ausgestaltet ist den zeitlichen Verlauf der relativen Lichtintensitäten der vom Szintillationsdetektor gemessenen Impulse auszuwerten und die gemessenen Impulse durch Nutzung des verschiedenen zeitlichen Verlaufs der relativen Lichtintensitäten in Testlichtimpulse und Messlichtimpulse zu trennen.

13. Szintillationsdetektor nach dem vorhergehenden Anspruch, wobei der Generator zur Erzeugung der Testlichtsignale und die elektronische Meßschaltung elektrisch voneinander getrennt sind.

14. Szintillationsdetektor nach Anspruch 12 oder 13, wobei der Generator zur Erzeugung der Testlichtsignale und die elektronische Meßschaltung mechanisch voneinander getrennt sind.

## Claims

1. A method for the separation of effective pulses and test pulses in scintillation detectors, preferably for the detection of ionizing radiation, comprising at least the following method steps:
- Selecting a regularly pulsed test light source, preferably a pulsed LED, wherein the individual test light pulses have a time dependent course of the relative light intensity, which differs from the time dependent course of the relative light intensity of the measurement light pulses;
- feeding the test light pulses generated by the test light source into the light detector of the scintillation detector for measurement of the test light pulses by the light detector;
- analyzing the time dependent course of the relative light intensities of the pulses measured by the scintillation detector;
- separating the measured pulses by using the different time dependent courses of the relative light intensities into test light pulses and measurement light pulses.

2. A method according to claim 1, wherein the analysis of the time dependent course of the relative light intensities of the pulses is carried out by using an adequate electrical circuit.

3. A method according to claim 1, wherein the pulses are sampled digitally (digitized), wherein the sampling is preferably carried out at a sampling rate between 1 and 1,000 mega samples per second (MS/s), particularly preferred at a sampling rate between 5 and 100 MS/s, and very particularly preferred at a sampling rate between 10 and 25 MS/s, and wherein the analysis of time dependent course of the relative light intensities of the pulses is carried out by means of a predetermined algorithm.

4. A method according to one of the preceding claims, wherein the test light signals are selected in such a way that they at least partially lie within the effective range of the measurement light signals, preferably within the particularly sensible effective range of the measurement light signals.

5. A method according to one of the preceding claims, wherein test light signals are modulated in such a way that pulse sequences with different-sized, determinable amplitudes are generated, which preferably substantially lie within the effective range of the measurement light signals.

6. A method according to the preceding claim, wherein the test light source is operated in such a way that at least one pulse sequence comprising at least one repetitive test light pulse is generated, wherein the pulse sequence is analyzed in the detector and is used for at least one of the following purposes:
- Determining the amplification factor of the light detector from the analyzed pulse sequence;
- determining the resolution of the light detector, preferably as a function of the detected quantity of light;
- stabilizing the light detector;
- determining the dead time of the scintillation detector.

7. A method according to claim 6, wherein the test light source is operated in such a way that at least one pulse sequence comprising at least two test light pulses of different amplitudes is generated, wherein the pulse sequence is analyzed in the detector and is used for at least one of the following purposes:
- Determining the amplification factor of the light detector from the analyzed pulse sequence;
- measuring the characteristic line of the light detector;
- determining the resolution of the light detector, preferably as a function of the detected quantity of light;
- stabilizing the light detector;
- linearizing the characteristic line of the light detector;
- determining the dead time of the scintillation detector.

8. A method for stabilizing a light detector comprising the following method steps:
- Generating and separating the test light pulses according to one of the preceding claims;
- analyzing the pulse amplitudes of the test light pulses at different points in time;
- determining the difference of the pulse amplitude of the test light pulses, preferably the average pulse amplitude of several test light pulses, with regard to a reference value;
- directing and stabilizing the amplification of the light detector using the difference of the pulse amplitudes of the test light pulses as reference input variable.

9. A method for determining the resolution of a light detector comprising the following method steps:
- Generating and separating the test light pulses according to one of the claims 1 to 7;
- analyzing the pulse amplitudes of the test light pulses at different points in time;
- determining the resolution of the light detector from the dispersion of the pulse amplitudes of the test light pulses.

10. A method for determining the dead time of a scintillation detector comprising the following method steps:
- Generating and separating the test light pulses according to one of the claims 1 to 7, wherein a predetermined number of test light pulses is generated in a preset unit of time;
- counting the signals identifies as test light pulses in the preset unit of time;
- determining the dead time of the scintillation detector by comparing the number of the generated test light pulses to the number of the signals identified as test light pulses.

11. A method according to one of the preceding claims, wherein the test light signals and the measurement light signals are mapped simultaneously during the actual measurement.

12. A scintillation detector, preferably with a non-stationary power-supply, very preferably a battery-operated scintillation detector, comprising a scintillator and a light detector, preferably with a photo cathode and photomultiplier, and a regularly pulsed test light source, preferably a pulsed LED for generating test light pulses, which can be fed into the light detector for measuring the test light pulses, and an electronic measuring circuit, **characterized in that** the electronic measuring circuit is configured in such a way to analyze the time dependent course of the relative light intensities of the pulses measured by the scintillation detector and to separate the measured pulses into test light pulses and measurement light pulses by using the different time dependent courses of the relative light intensities.

13. A scintillation detector according to the preceding claim, wherein the generator for generating the test light signals and the electronic measuring circuit test are electrically separated from one another.

14. A scintillation detector according to claim 12 or 13, wherein the generator for generating the test light signals and the electronic measuring circuit are mechanically separated from one another.

## Revendications

1. Procédé de séparation d'impulsions utiles et d'impulsions test dans des détecteurs à scintillations, de préférence pour apporter la preuve d'un rayonnement ionisant, comportant au moins les étapes de procédé suivantes :
• sélection d'une source test de lumière pulsée de manière régulière, de préférence d'une DEL pulsée, dont les impulsions test de lumière individuelles présentent une variation temporelle d'intensité lumineuse relative qui est différente de la variation temporelle de l'intensité lumineuse relative des impulsions de mesure de lumière,
• introduction des impulsions test de lumière générées par la source test de lumière dans le détecteur de lumière du détecteur à scintillations en vue de la mesure des impulsions test de lumière par le détecteur de lumière,
• analyse de la variation temporelle des intensités lumineuses relatives des impulsions mesurées par le détecteur à scintillations,
• séparation des impulsions mesurées par exploitation de la variation temporelle différente des intensités lumineuses relatives en impulsions test de lumière et en impulsions de mesure de lumière.

2. Procédé selon la revendication 1, l'analyse de la variation temporelle des intensités lumineuses relatives des impulsions s'opérant à l'aide d'un circuit électrique approprié.

3. Procédé selon la revendication 1, les impulsions étant échantillonnées de manière numérique (munérisées), l'échantillonnage étant réalisé de préférence à une vitesse d'échantillonnage comprise entre 1 et 1000 mégaéchantillons par seconde (MS/s), de plus grande préférence à une vitesse d'échantillonnage comprise entre 5 et 100 MS/s et de plus grande préférence encore à une vitesse d'échantillonnage entre 10 et 25 MS/s, l'analyse de la variation temporelle des intensités lumineuses relatives des impulsions étant effectuée à l'aide d'un algorithme prédéfini.

4. Procédé selon l'une des revendications précédentes, les signaux test de lumière étant choisis de manière à ce qu'ils se situent, au moins en partie, dans la partie utile, de préférence dans la partie utile particulièrement sensible, des signaux de mesure de lumière.

5. Procédé selon l'une des revendications précédentes, les signaux test de lumière étant modulés de manière à ce que des trains d'impulsions avec des amplitudes de tailles différentes et définissables soient générés, lesquels se situent de préférence essentiellement dans la partie utile des signaux de mesure de lumière.

6. Procédé selon la revendication précédente, la source test de lumière étant exploitée de manière à ce qu'au moins un train d'impulsions présentant au moins une impulsion test de lumière récurrente soit généré, le train d'impulsions étant analysé dans le détecteur et étant utilisé à au moins l'une des fins suivantes :
• définition du facteur d'amplification du détecteur de lumière à partir du train d'impulsions analysé ;
• définition de la résolution du détecteur de lumière, de préférence en fonction de la quantité de lumière détectée ;
• stabilisation du détecteur de lumière ;
• définition du temps mort du détecteur à scintillations.

7. Procédé selon la revendication 6, la source test de lumière étant exploitée de manière à ce qu'au moins un train d'impulsions présentant au moins deux impulsions test de lumière d'amplitudes différentes soit génère, le train d'impulsions étant analysé dans le détecteur et étant utilisé à au moins l'une des fins suivantes :
• définition d'un facteur d'amplification du détecteur de lumière à partir du train d'impulsions analysé ;
• mesure de la ligne caractéristique du détecteur de lumière ;
• définition de la résolution du détecteur de lumière, de préférence en fonction de la quantité de lumière détectée ;
• stabilisation du détecteur de lumière ;
• linéarisation de la ligne caractéristique du détecteur de lumière ;
• définition du temps mort du détecteur à scintillations.

8. Procédé de stabilisation d'un détecteur de lumière avec les étapes de procédé suivantes :
• génération et séparation d'impulsions test de lumière selon l'une des revendications précédentes ;
• analyse des amplitudes des impulsions test de lumière à des moments différents ;
• mesure de la différence d'amplitude des impulsions test de lumière, de préférence de l'amplitude moyenne de plusieurs impulsions test de lumière, à une valeur de référence ;
• application et stabilisation de l'amplification du détecteur de lumière en utilisant la différence d'amplitude des impulsions test de lumière comme valeur de référence.

9. Procédé d'évaluation de la résolution d'un détecteur de lumière avec les étapes de procédé suivantes :
• génération et séparation d'impulsions test de lumière selon l'une des revendications 1 à 7 ;
• analyse des amplitudes des impulsions test de lumière à des moments différents ;
• définition de la résolution du détecteur de lumière à partir de la dispersion des amplitudes des impulsions test de lumière.

10. Procédé d'évaluation du temps mort d'un détecteur à scintillations avec les étapes de procédé suivantes :
• génération et séparation d'impulsions test de lumière selon l'une des revendications 1 à 7, un nombre prédéfini d'impulsions test de lumière étant généré dans une unité de temps imposée ;
• comptage des signaux identifiés comme impulsions test de lumière dans l'unité de temps imposée ;
• définition du temps mort du détecteur à scintillations en comparant le nombre d'impulsions test de lumière générées avec le nombre de signaux identifiés comme impulsions test de lumière.

11. Procédé selon l'une des revendications précédentes, les signaux test de lumière étant enregistrés parallèlement aux signaux de mesure de lumière pendant la mesure proprement dite.

12. Détecteur à scintillations, de préférence avec une alimentation en énergie non stationnaire, de plus grande préférence un détecteur à scintillations alimente par batterie, présentant un scintillateur et un détecteur de lumière, de préférence avec photocathode et photomultiplicateur, et une source test de lumière pulsée de manière régulière, de préférence une DEL pulsée destinée à générer des impulsions test de lumière, lesquels peuvent être introduits dans le détecteur de lumière pour mesurer les impulsions test de lumière, et un circuit électronique de mesure, **caractérisé en ce que** le circuit électronique de mesure est conçu pour analyser la variation temporelle des intensités lumineuses relatives des impulsions mesurées par le détecteur à scintillations et pour séparer les impulsions mesurées en exploitant la variation temporelle différente des intensités lumineuses relatives en impulsions test de lumière et en impulsions de mesure de lumière.

13. Détecteur à scintillations selon la revendication précédente, le générateur permettant de créer les signaux test de lumière et le circuit électronique de mesure étant séparés électriquement l'un de l'autre.

14. Détecteur à scintillations selon la revendication 12 ou 13, le générateur permettant de créer les signaux test de lumière et le circuit électronique de mesure étant séparés mécaniquement l'un de l'autre.
